Europäisches Patentamt

(19) European Patent Office

Office européen des brevets

(11) Numéro de publication : **0 045 272**
**B1**

(12) # FASCICULE DE BREVET EUROPÉEN

(45) Date de publication du fascicule du brevet :
05.09.84

(21) Numéro de dépôt : 81420102.6

(22) Date de dépôt : 08.07.81

(51) Int. Cl.³ : **B 23 Q   3/06**

(54) **Dispositif de blocage d'une pièce lors d'une opération d'usinage notamment de perçage.**

(30) Priorité : 25.07.80 FR 8016757

(43) Date de publication de la demande :
03.02.82 Bulletin 82/05

(45) Mention de la délivrance du brevet :
05.09.84 Bulletin 84/36

(84) Etats contractants désignés :
**CH DE FR GB IT LI**

(56) Documents cités :
**GB-A- 1 328 195**
**US-A- 3 345 889**

(73) Titulaire : **Mehier, Henri**
**18, quai Tilsit**
**F-69002 Lyon (FR)**

**Guiot-Desvarenne, Robert**
**22, rue Lucien Maître**
**F-69300 Caluire (FR)**

(72) Inventeur : **Mehier, Henri**
**18, quai Tilsit**
**F-69002 Lyon (FR)**

(74) Mandataire : **Laurent, Michel et al**
**Bureaux Chalin A1 20, rue Louis Chirpaz Boîte Postale 32**
**F-69131 Lyon-Ecully (FR)**

Jouve, 18, rue St-Denis, 75001 Paris, France

EP 0 045 272 B1

## Description

La présente invention concerne un dispositif perfectionné, simple et efficace, permettant le maintien et le positionnement d'une pièce quelconque lors d'une opération d'usinage telle que par exemple une opération de perçage, de fraisage, de sciage...

A ce jour, lorsque l'on désire usiner une pièce, les solutions les plus couramment utilisées pour maintenir et positionner ladite pièce consistent à utiliser des étaux, des pince-étaux, des serre-joints, des valets...

De tels appareils, par exemple ceux du type décrit dans l'US-A-3 345 889 et GB-A-1 328 195 sont efficaces mais présentent cependant un certain nombre d'inconvénients tels que par exemple de ne pas permettre un blocage et un déblocage de manière pratiquement instantanée.

Or, on a trouvé et c'est ce qui fait l'objet de la présente invention, un dispositif simple et efficace qui surmonte les inconvénients des solutions antérieures et qui permet de bloquer une pièce à usiner sur un plan de travail, d'une manière efficace, de façon pratiquement instantanée et sans effort important. Un tel dispositif présente également l'avantage de pouvoir être utilisé pour bloquer des pièces ayant des formes et des dimensions pouvant varier dans de grandes limites.

D'une manière générale, l'invention concerne donc un dispositif de blocage d'une pièce sur un plan de travail lors d'une opération d'usinage, notamment de perçage, ce dispositif comprenant, d'une manière comparable au dispositif décrit dans l'US-A-3 345 689 :

— une colonne fixée perpendiculairement au plan de travail,

— un ensemble de blocage proprement dit, monté coulissant sur ladite colonne et comprenant :

a) deux bagues enveloppant chacune partiellement la colonne et disposées face à face de part et d'autre de celle-ci,

b) une tige de pression associée auxdites bagues et susceptible de pouvoir coulisser parallèlement au plan de travail ou en direction de celui-ci,

c) des moyens permettant, sous l'action d'un levier de commande, de provoquer le pivotement en direction du plan de travail de l'extrémité de la tige de pression qui est en contact avec la pièce à bloquer, afin d'assurer son immobilisation sur ledit plan de travail.

Ce dispositif selon l'invention se caractérise :

1. en ce qu'afin, d'une part, de serrer les deux bagues sur la colonne et, d'autre part, simultanément ou avec un léger décalage, de provoquer le pivotement de la tige de pression en direction du plan de travail, la bague située du côté de la pièce à bloquer comporte deux plaques latérales ayant une longueur telle qu'elles débordent en retrait de la colonne et comportent d'une part, des éléments pour le maintien et le guidage de la tige de pression et, d'autre part, des gorges formant palier pour un axe supportant deux jeux de cames commandés par le levier unique, l'une prenant appui sur la bague arrière de manière à provoquer le serrage desdites bagues sur la colonne, les autres agissant sur la tige de pression et provoquant son pivotement autour de l'axe vers le plan de travail de manière à provoquer le serrage de la pièce à bloquer, ou

2. en ce qu'afin d'une part, de serrer les deux bagues sur la colonne et d'autre part, simultanément ou avec un léger décalage de provoquer le pivotement de la tige de pression, les deux bagues qui enveloppent partiellement la colonne fixe sont constituées de deux galets, montés espacés l'un de l'autre sur une plaque-support commune, les galets présentant des échancrures permettant de les adapter sur ladite colonne, les axes desdits galets étant disposés dans des plans parallèles décalés l'un par rapport à l'autre, celui disposé du côté de la pièce à serrer étant situé à un niveau supérieur de l'axe, ou

3. en ce que la tige de pression se présente sous la forme d'un ensemble comportant deux bras parallèles, les deux bras étant disposés de part et d'autre de la bague avant et pouvant pivoter indépendamment l'un de l'autre par rapport à la colonne, étant soumis à l'action d'un système à cames permettant, sous l'action du levier de commande unique, d'une part, de serrer les deux bagues sur la colonne et, d'autre part, simultanément ou avec un léger décalage de provoquer le pivotement de la tige de pression.

Dans le premier mode de réalisation, la tige de pression se présente avantageusement sous la forme d'un ensemble comportant deux bras parallèles aux extrémités convergentes, cet ensemble étant maintenu par deux jeux de galets, fixés de part et d'autre de la bague avant, dans des plans espacés parallèles au plan de travail et décalés l'un par rapport à l'autre.

Dans le deuxième mode de réalisation, la tige de pression agissant sur la pièce à bloquer est supportée par la plaque de maintien des galets, par exemple au moyen de deux paliers dans lesquels elle peut coulisser librement longitudinalement. Les moyens permettant le blocage des galets contre la colonne ainsi que le pivotement en direction du plan de travail de l'extrémité de la tige de pression sont, dans ce mode de réalisation, constitués par l'axe même supportant le galet arrière, cet axe étant formé par un excentrique susceptible d'être déplacé angulairement sous l'action d'un levier unique.

Bien entendu, l'espacement entre les galets sera déterminé en fonction de la section de la colonne de maintien.

L'invention et les avantages qu'elle apporte seront cependant mieux compris grâce aux exemples de réalisation donnés ci-après, à titre indicatif mais non limitatif, et qui sont illustrés par les schémas annexés dans lesquels :

la figure 1 est une vue en perspective schématique montrant le premier mode de réalisation d'un dispositif de blocage d'une pièce sur un plan de travail réalisé conformément à l'invention,

les figures 2 et 3 sont respectivement des vues en élévation et de dessus d'un tel dispositif de blocage,

les figures 4 et 5 sont respectivement des vues en élévation et de dessus du deuxième mode de réalisation conforme à l'invention,

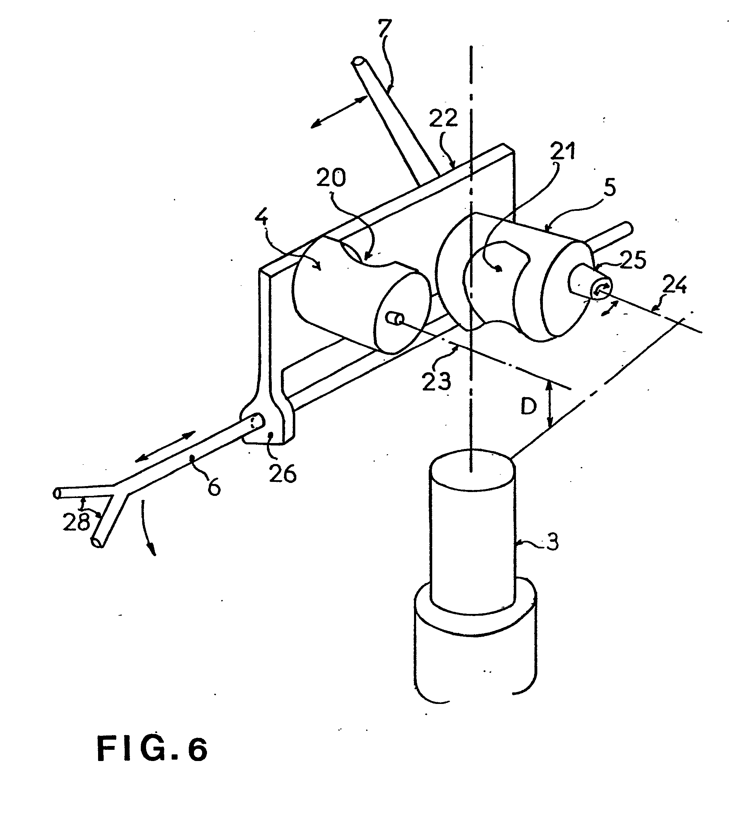

la figure 6 est une vue schématique, partielle, en perspective du mode de réalisation illustré par les figures 4 et 5,

la figure 7 illustre en perspective, une variante des modes de réalisation illustrés par les figures 1, 2 et 3

la figure 8 est également une vue en perspective montrant le troisième mode de réalisation selon lequel les deux bras formant la tige de pression peuvent être déplacés indépendamment l'un de l'autre, ce qui permet de serrer des pièces présentant des formes irrégulières, les figures 9 et 10 étant des vues de détail respectivement de l'ensemble assurant le blocage de la bague arrière et de ladite bague arrière d'un tel ensemble.

Dans la suite de la description, pour les divers modes de réalisation qui seront développés plus en détail, les mêmes références seront utilisées pour désigner les mêmes organes ou des organes similaires.

Si l'on se reporte aux figures annexées, le dispositif de blocage selon l'invention pour l'immobilisation d'une pièce 1 sur un plan de travail 2 lors d'une opération d'usinage, par exemple de perçage, est constitué essentiellement :

— d'une colonne 3, fixée perpendiculairement au plan de travail,

— d'un ensemble de blocage proprement dit, monté coulissant sur ladite colonne 3.

L'ensemble de blocage comprend essentiellement :

— deux bagues 4-5, enveloppant chacune partiellement la colonne 3 et disposées de part et d'autre de celle-ci ; dans la suite de la description, la bague 4 disposée du côté de la pièce 1 sera désignée par l'expression « bague avant » alors que la bague 5 sera, par opposition, désignée par l'expression « bague arrière »,

— une tige de pression, associée auxdites bagues 4 et 5 pouvant coulisser dans un plan sensiblement parallèle au plan de travail 2 ;

— des moyens permettant, sous l'action d'un levier de commande unique 7, d'une part, de serrer les deux bagues 4 et 5 sur la colonne 3 et, d'autre part, simultanément ou avec un léger décalage, de provoquer le pivotement en direction du plan de travail 2, de l'extrémité de la tige 6 de pression qui est en contact avec la pièce 1 à bloquer.

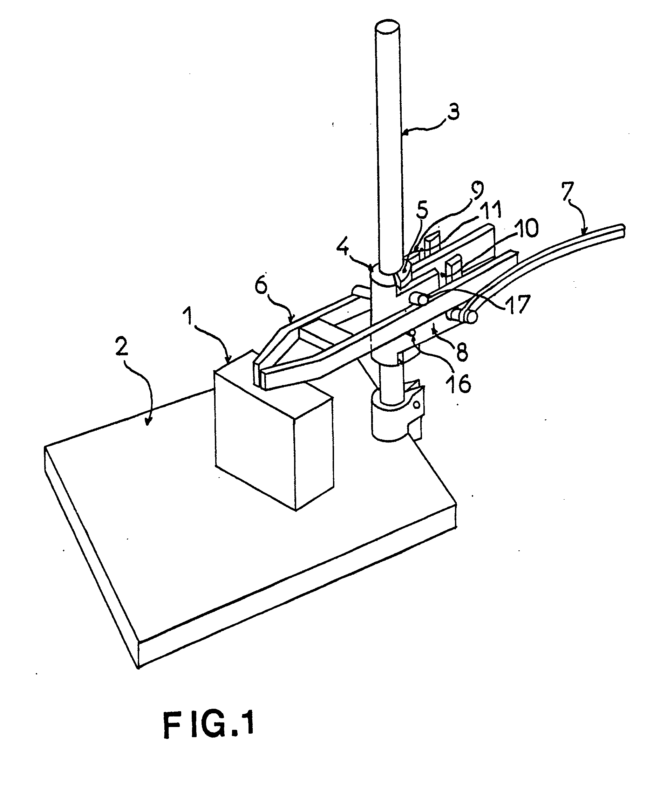

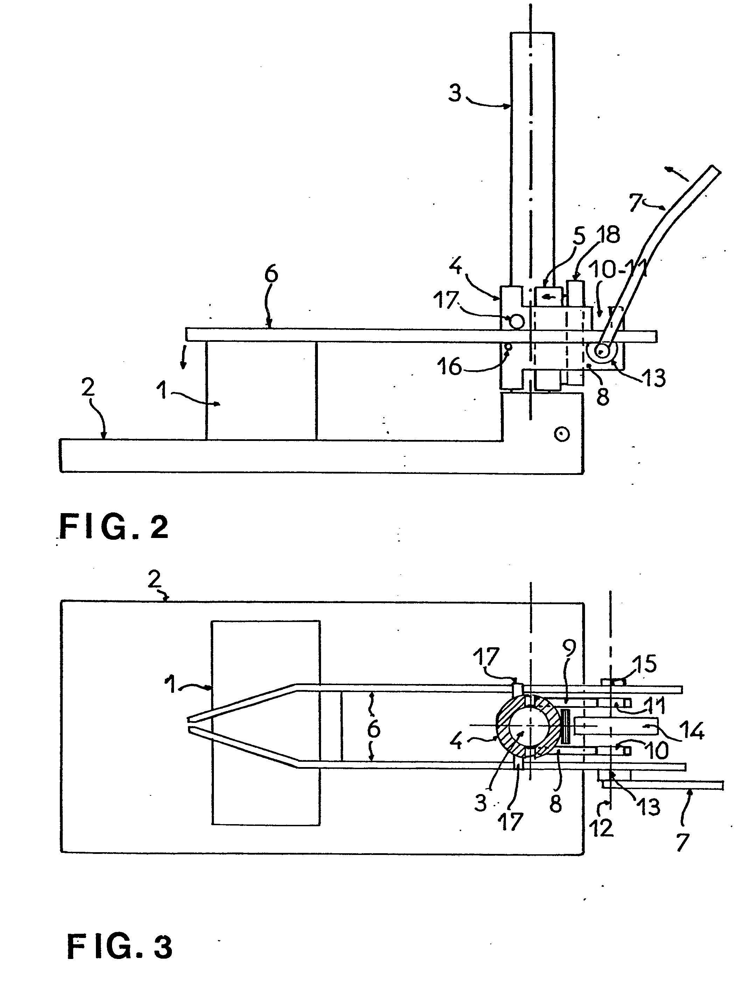

Dans le premier mode de réalisation illustré par les figures 1, 2 et 3, la bague 4, située du côté de la pièce 1 à bloquer, comporte deux plaques latérales 8-9 encastrables dans deux gorges prévues à la périphérie de la bague arrière 5. Ces plaques 8-9 ont une longueur telle qu'elles débordent en retrait de la colonne fixe 3. L'ensemble constitué par la bague avant 4 et les plaques latérales 8-9 comporte d'une part, des éléments de maintien et de guidage pour la tige de pression 6 et, d'autre part, des gorges 10-11 formant palier pour un axe 12 supportant deux jeux de cames 13-14-15, commandées par un levier unique 7, l'une 14 prenant appui sur la bague arrière 5, les autres 13-15 étant disposées en dessous de la tige de pression constituée, dans le cas présent, de deux bras parallèles disposés de part et d'autre de l'ensemble formé par les bagues 4 et 5 et les plaques 8 et 9. Dans ce mode de réalisation, le maintien et le guidage de la tige de pression 6 sont obtenus au moyen de deux paires de galets 16-17 disposées de part et d'autre de la bague 4. Ces galets 16 et 17 sont disposés dans deux plans parallèles au plan de travail 2, espacés d'une distance corrrespondant sensiblement à l'épaisseur de la tige de pression 6. Le galet inférieur 16 est, par ailleurs, décalé vers l'avant par rapport au galet supérieur 17 qui sert de point de pivotement. Enfin, une plaque 18 peut éventuellement être fixée à la bague arrière 5, la came 14 venant s'appuyer sur cette plaque 18.

La mise en œuvre d'un tel dispositif est le suivant. Les deux bagues 4 et 5 n'étant pas maintenues en pression contre la colonne 3, dans un premier temps, on dispose la pièce 1 sur le plan de travail 2 et par coulissement de l'ensemble de blocage sur ladite colonne 3 on positionne l'extrémité de la tige de pression 6 sur la pièce 1. Cela étant fait par action sur le levier 7, on provoque la rotation de l'axe 12 et, par suite, celle des cames 13-14-15, la came 14 prenant appui sur la bague 5, éventuellement par l'intermédiaire de la plaque 18, et provoquant ainsi le serrage des deux bagues 4-5 sur la colonne 3 tandis que, les cames 13-15 agissant sous la tige 6, provoquent, simultanément ou avec un léger décalage par rapport au serrage des bagues 4 et 5, le soulèvement de l'arrière de ladite tige 6 et, par suite, son pivotement autour du galet 16 par appui sur le galet 17, donc en direction du plan de travail 2 pour l'extrémité de la tige de pression 6 en contact avec la pièce 1 et, en conséquence, le blocage de cette dernière. Pour effectuer le déblocage, après perçage par exemple, il suffit d'agir sur le levier 7 en sens inverse, ce qui débloque de manière pratiquement instantanée la pièce usinée.

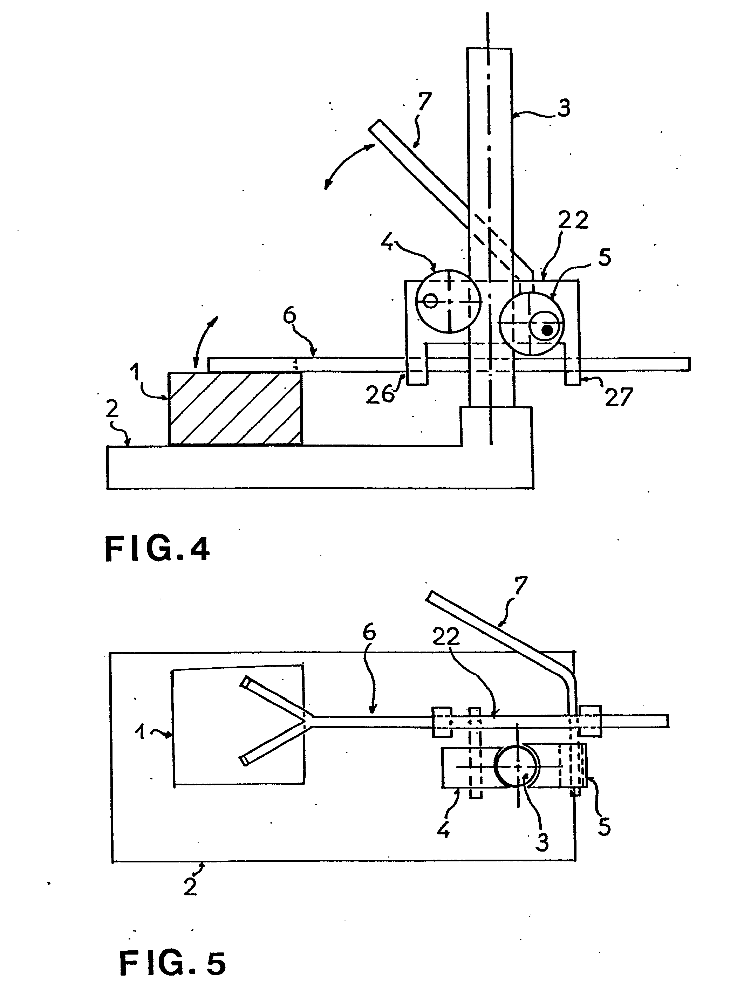

Le deuxième mode de réalisation illustré par les figures 4 et 5 se différencie essentiellement par les points suivants.

Dans ce mode de réalisation, les deux bagues 4 et 5 permettant le coulissement et le blocage de l'ensemble sur la colonne 3 sont constituées de deux galets cylindriques, présentant chacun une échancrure 20-21 permettant de les adapter autour de la colonne 3. Ces galets sont montés sur une plaque-support commune 22 par l'intermédiaire d'axes 23-24. Les plans des axes 23-24 parallèles au plan de travail sont décalés d'une distance D l'un par rapport à l'autre. Par ailleurs, le galet 5 est monté sur un excentrique 25 qui peut être actionné par l'intermédiaire d'un levier 7.

Dans ce mode de réalisation, la plaque 22 supportant les galets 4-5 sert également d'élément de maintien de positionnement à la tige de pression 6. Pour cela, à la partie inférieure de cette plaque 22 sont prévus deux paliers 26-27 (ou tube) dans lesquels ladite tige 6 peut coulisser librement. Dans ce mode de réalisation, la tige de pression 6 comporte une extrémité active 28 ayant la forme d'un V. Bien entendu, cela n'est pas limitatif et elle pourrait avoir toute autre configuration par exemple présenter des échancrures permettant le maintien d'éléments tubulaires.

Le mode de mise en oeuvre d'un tel dispositif est le suivant. Comme précédemment, lors de la mise en place de la pièce 1 sur le plan de travail 2, les deux galets 4-5 sont débloqués sur la colonne 3. Cela est obtenu en modifiant le positionnement de l'excentrique 25 sur lequel le galet 5 est monté par action sur le levier 7. La tige 6 étant mise en contact avec la pièce 1, par action sur le levier 7, on provoque alors la rotation de l'excentrique 25, ce qui provoque simultanément le serrage des galets 4 et 5 autour de la colonne 3 et, le pivotement en direction du plan de travail 2 de l'extrémité active de la tige de pression 6 et donc, le serrage de la pièce 1 sur le plan de travail 2. L'opération d'usinage peut alors être réalisée et le déblocage est obtenu par action inverse sur le levier 7.

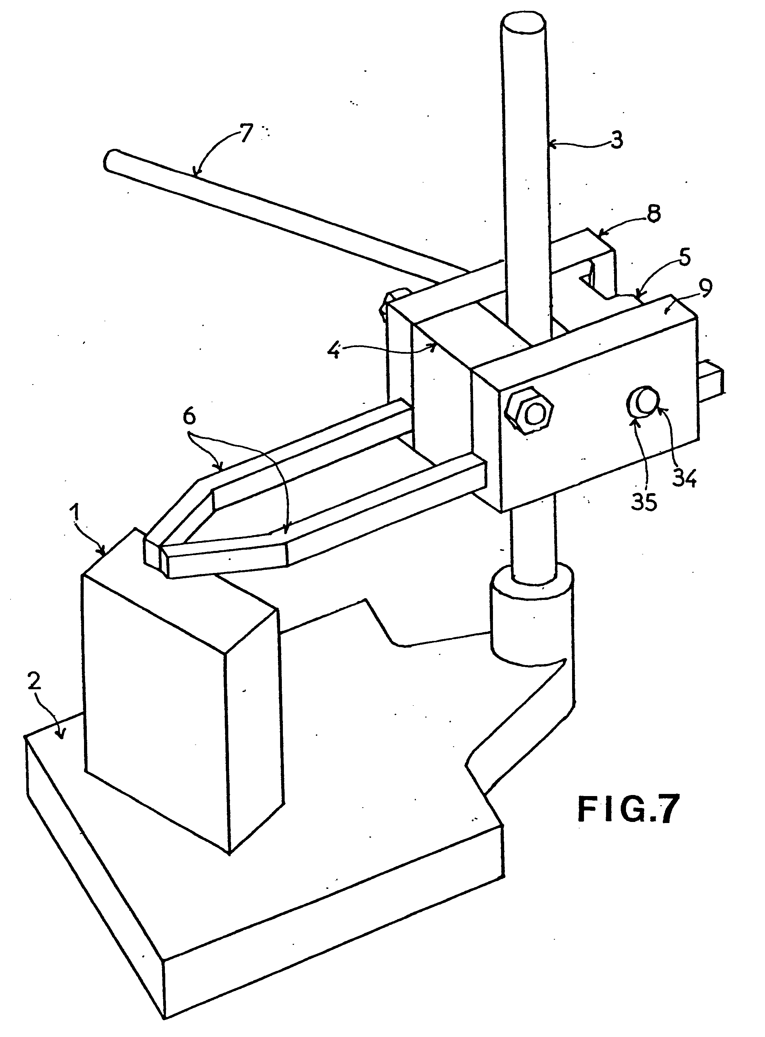

Dans les variantes de réalisation illustrées par les figures 7 et 8, les bagues 4-5 disposées de part et d'autre de la colonne 3 sont formées de deux blocs sensiblement de forme parallélépipédique.

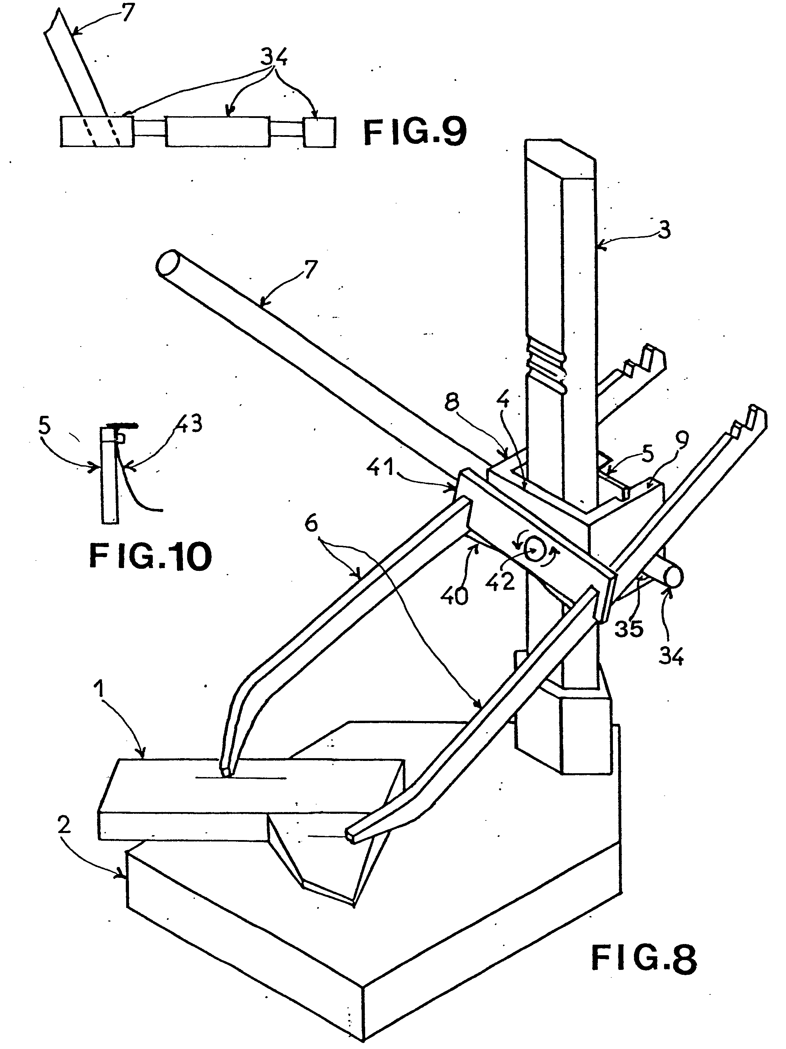

La bague 4 supporte sur ses deux côtés des parties latérales 8-9 servant d'éléments de maintien et de positionnement à la tige de pression 6 constituée de deux bras parallèles. Dans ce mode de réalisation le blocage contre la colonne 3 est réalisé par l'intermédiaire du levier de commande unique 7 qui provoque la rotation d'une came 34 fony la réalisation est montrée plus en détail à la figure 9. La partie centrale de la came 34 provoque le serrage de la bague arrière 5 contre la colonne 3, cela étant favorisé par le fait que l'orifice 35 prévu dans les parties latérales 8-9 présente un diamètre supérieur à celui de l'extrémité de ladite came 34, ce qui permet également de rendre les bras de pression relativement indépendants dans le mode de réalisation de la fig. 7.

Dans le troisième mode illustré par la figure 8 la tige de pression est formée de deux bras parallèles 6 amovibles qui sont montés de manière à pouvoir être déplacés indépendamment l'un de l'autre. Pour cela le maintien des bras 6 est assuré au moyen d'une plaque 31 montée pivotante, par l'intermédiaire d'un axe 42, sur la face avant de la bague 4. Une lame flexible 40 disposée en dessous des bras 6 assure le maintien dans les échancrures prévues aux extrémités de la plaque 41. Dans ce mode de réalisation, la bague 4 se présente sensiblement sous la forme d'un U, la bague arrière 5 étant constituée simplement par une plaque encastrée dans deux rainures prévues sur les parties latérales 8-9 de la bague avant 4. Ainsi que cela est illustré à la figure 10, cette bague arrière 5 peut comporter une lame flexible 43 formant ressort, lame contre laquelle s'appuie la came assurant le serrage de l'immobilisation de l'ensemble contre la colonne 3.

Ce mode de réalisation est particulièrement intéressant non seulement par sa grande simplicité mais également par le fait qu'il permet d'assurer le serrage de pièce 1 présentant une configuration variable par exemple des variations dans son épaisseur. En effet, sous l'action du levier 7 qui, comme précédemment entraîne la rotation d'un ensemble de came 34 on provoque non seulement le serrage de la bague arrière 5 contre la colonne 3 mais également, du fait du montage pivotant de chacun des bras 6 sur la bague avant 4, le maintien de la pièce 1 et ce, même lorsqu'elle présente une épaisseur variable comme cela est illustré.

Par rapport aux dispositifs de blocage antérieurs, l'invention présente de très grands avantages.

En effet, outre sa très grande simplicité, un tel dispositif est facile à mettre en œuvre par le fait qu'une seule action sur le levier de commande permet à la fois l'immobilisation sur la colonne 3 et le serrage de la pièce 1. De plus, le serrrage peut être réalisé dans n'importe quelle position, notamment lorsque la colonne 3 présente une section circulaire. En effet, dans ce cas, il est possible de faire pivoter le dispositif de blocage autour de cette colonne. Cela est également vrai lorsque ladite colonne 3 présente un autre type de section par exemple, une section hexagonale comme cela est représenté à la figure 8.

Enfin, l'opération de blocage ainsi que celle de déblocage après usinage sont réalisées de manière pratiquement instantanée.

Il est évident que la tige de pression peut avoir une toute autre configuration que celles décrites, la partie active de cette tie pouvant être adaptée en fonction de la forme des pièces à travailler. Il pourrait également être envisagé d'inverser la position, par rapport à la colonne, des moyens de blocage. De plus, dans le second mode de réalisation, on peut utiliser des galets amovibles et/ou comportant plusieurs empreintes, ce qui permet d'adapter le dispositif à des colonnes différentes.

## Revendications

1. Dispositif de blocage d'une pièce (1) sur un plan de travail (2) lors d'une opération d'usinage, notamment de perçage, du type comprenant :
— une colonne (3) fixée perpendiculairement au plan de travail (2),
— un ensemble de blocage proprement dit monté coulissant sur la colonne (3) et comprenant :
a) deux bagues (4)-(5) enveloppant chacune partiellement la colonne (3) et disposées face à face de part et d'autre de celle-ci,

b) une tige de pression (6) associée auxdites bagues (4-5) et susceptible de pouvoir coulisser parallèlement au plan de travail (2) ou en direction de celui-ci,

c) des moyens permettant, sous l'action d'un levier (7) de commande unique, de provoquer le pivotement en direction du plan de travail (2) de l'extrémité de la tige de pression (6) qui est en contact avec la pièce (1) à bloquer afin d'assurer son immobilisation sur le plan de travail (2), caractérisé par le fait que afin, d'une part, de serrer les deux bagues (4-5) sur la colonne (3) et, d'autre part, simultanément ou avec un léger décalage, de provoquer le pivotement de la tige de pression (6) en direction du plan de travail, la bague (4), située du côté de la pièce (1) à bloquer comporte deux plaques latérales (8-9) ayant une longueur telle qu'elles débordent en retrait de la colonne (3) et comportent d'une part, des éléments pour le maintien et le guidage de la tige de pression (6) et, d'autre part, des gorges (10-11) formant palier pour un axe (12) supportant deux jeux de cames (13-14-15) commandés par le levier unique (7), l'une (14) prenant appui sur la bague arrière (5) de manière à provoquer le serrage desdites bagues (4-5) sur la colonne (3), les autres (13-15) agissant sur la tige de pression (6) et provoquant son pivotement autour de l'axe (17) vers le plan de travail de manière à provoquer le serrage de la pièce (1) à bloquer.

2. Dispositif selon la revendication 1, caractérisé par le fait que la tige de pression (6) se présente sous la forme d'un ensemble comportant deux bras parallèles aux extrémités convergentes, cet ensemble étant maintenu par deux jeux de galets (16-17), fixés de part et d'autre de la bague avant (4), dans des plans espacés parallèles au plan de travail (2) et décalés l'un par rapport à l'autre.

3. Dispositif de blocage d'une pièce (1) sur un plan de travail (2) lors d'une opération d'usinage, notamment de perçage, du type comprenant :

— une colonne (3) fixée perpendiculairement au plan de travail (2),

— un ensemble de blocage proprement dit monté coulissant sur la colonne (3) et comprenant :

a) deux bagues (4)-(5) enveloppant chacune partiellement la colonne (3) et disposées face à face de part et d'autre de celle-ci,

b) une tige de pression (6) associée auxdites bagues (4-5) et susceptible de pouvoir coulisser parallèlement au plan de travail (2) ou en direction de celui-ci,

c) des moyens permettant, sous l'action d'un levier de commande unique (7) de provoquer le pivotement en direction du plan de travail (2) de l'extrémité de la tige de pression (6) qui est en contact avec la pièce (1) à bloquer afin d'assurer son immobilisation sur le plan de travail (2), caractérisé par le fait qu'afin, d'une part, de serrer les deux bagues (4-5) sur la colonne (3) et d'autre part, simultanément ou avec un léger décalage de provoquer le pivotement de la tige de pression (6), les deux bagues (4-5) qui enveloppent partiellement la colonne fixe (3) sont constituées de deux galets, montés espacés l'un de l'autre sur une plaque-support commune (22), les galets présentant des échancrures (20-21) permettant de les adapter sur ladite colonne (3), les axes (23-24) desdits galets étant disposés dans des plans parallèles décalés l'un par rapport à l'autre, celui (23) disposé du côté de la pièce à serrer étant situé à un niveau supérieur de l'axe (24).

4. Dispositif selon la revendication 3, caractérisé par le fait que la tige de pression (6) agissant sur la pièce (1) à bloquer est supportée par la plaque de maintien (22) des galets au moyen de deux paliers (26-27) dans lesquels elle peut coulisser librement longitudinalement.

5. Dispositif selon l'une des revendications 3 et 4, caractérisé par le fait que les moyens permettant le blocage des galets (4-5) contre la colonne (3) ainsi que le pivotement en direction du plan de travail (2) de l'extrémité de la tige de pression (6) sont constitués par l'axe même (24) supportant le galet arrière (5), cet axe (24) étant constitué par un excentrique (25) susceptible d'être déplacé angulairement sous l'action d'un levier unique (7).

6. Dispositif de blocage d'une pièce (1) sur un plan de travail (2) lors d'une opération d'usinage, notamment de perçage, du type comprenant :

— une colonne (3) fixée perpendiculairement au plan de travail (2),

— un ensemble de blocage proprement dit monté coulissant sur la colonne (3) et comprenant :

a) deux bagues (4)-(5) enveloppant chacune partiellement la colonne (3) et disposées face à face de part et d'autre de celle-ci,

b) une tige de pression (6) associée auxdites bagues (4)-(5) et susceptible de pouvoir coulisser parallèlement au plan de travail (2) ou en direction de celle-ci,

c) des moyens permettant sous l'action d'un levier de commande unique (7) de provoquer le pivotement en direction du plan de travail (2) de l'extrémité de la tige de pression (6) qui est en contact avec la pièce (1) à bloquer afin d'assurer son immobilisation sur le plan de travail (2), caractérisé par le fait que la tige de pression (6) se présente sous la forme d'un ensemble comportant deux bras parallèles, les deux bras étant disposés de part et d'autre de la bague avant (4) et pouvant pivoter indépendamment l'un de l'autre par rapport à la colonne (3), étant soumis à l'action d'un système à cames (34-35) permettant, sous l'action du levier de commande unique (7), d'une part, de serrer les deux bagues (4-5) sur la colonne (3) et, d'autre part, simultanément ou avec un léger décalage de provoquer le pivotement de la tige de pression (6).

7. Dispositif selon la revendication 6, caractérisé par le fait que les bras (6) sont amovibles et que leur maintien est assuré au moyen d'une plaque (31) montée pivotante, par l'intermédiaire d'un axe (42) sur la face avant de la bague (4), une lame flexible (40) étant disposée en dessous des bras (6) et assurant leur maintien.

8. Dispositif selon la revendication 6, caractérisé par le fait que le blocage contre la colonne (3) est réalisé par l'intermédiaire du levier de commande unique (7) qui provoque la rotation d'une came (34) provoquant le serrage de la bague arrière (5) contre la colonne (3), cette came (34) étant disposée dans des orifices (35) prévus dans les parties latérales (8), (9) de la bague avant (4), lesdits orifices (35) ayant un diamètre supérieur à la came (34), ce qui favorise le serrage de ladite bague arrière (5) contre la colonne (3).

## Claims

1. Device for locking a workpiece (1) on a working plane (2) during a machining operation, especially a drilling operation, of the type comprising :
— a column (3) fastened perpendicularly to the working plane (2),
— an actual locking assembly mounted to slide on the column (3) and comprising :
   a) two rings (4-5) each partially surrounding the column (3) and arranged opposite one another on either side of the latter,
   b) a pressure rod (6) associated with the said rings (4-5) and capable of being able to slide parallel to the working plane (2) or towards the latter,
   c) means making it possible, under the action of a single control lever (7), to pivot towards the working plane (2) of the end of the pressure rod (6) which is in contact with the workpiece (1) to be locked, in order to ensure that it is immobilised on the working plane (2),
characterised in that, in order, on the one hand, to clamp the two rings (4-5) on the column (3) and, on the other hand, simultaneously or with a slight offset to cause the pressure rod (6) to pivot towards the working plane, the ring (4) located on the same side of the workpiece (1) to be locked incorporates two lateral plates (8-9) having such a length that they extend back beyond the column (3) and comprise, on the one hand, elements for maintaining and guiding the pressure rod (6) and, the other hand, grooves (10-11) forming a bearing for an axle (12) supporting two sets of cams (13-14-15) controlled by the single lever (7), one (14) bearing on the rear ring (5) so as to cause the said rings (4-5) to be clamped on the column (3), the others (13-15) acting on the pressure rod (6) and causing it to pivot about the axle (17) towards the working plane, so as to cause the clamping of the workpiece (1) to be locked.

2. Device according to Claim 1, characterised in that the pressure rod (6) takes the form of an assembly comprising two parallel arms with converging ends, this assembly being maintained by two sets of rollers (16-17) fastened on either side of the front ring (4) in planes located at a distance from on another, parallel to the working plane (2) and offset relative to one another.

3. Device for locking a workpiece (1) on a working plane (2) during a machining operation, especially a drilling operation, of the type comprising :
— a column (3) fastened perpendicularly to the working plane (2),
— an actual locking assembly mounted to slide on the column (3) and comprising :
   a) two rings (4-5) each partially surrounding the column (3) and arranged opposite one another on either side of the latter,
   b) a pressure rod (6) associated with the said rings (4-5) and capable of being able to slide parallel to the working plane (2) or towards the latter,
   c) means making it possible, under the action of a single control lever (7), to pivot towards the working plane (2) of the end of the pressure rod (6) which is in contact with the workpiece (1) to be locked, so as to ensure that it is immobilised on the working plane (2),
characterised in that, in order, on the one hand, to clamp the two rings (4-5) on the column (3) and, on the other hand, simultaneously or with a slight offset to cause the pivoting of the pressure rod (6), the two rings (4-5) which partially surround the fixed column (3) consist of two rollers mounted at a distance from one another on a common support plate (22), the rollers having notches (20-21) making it possible to match them to the said column (3), the axles (23-24) of the said rollers being arranged in parallel planes offset relative to one another, the axle (23) arranged on the same side as the workpiece to be clamped being located at a higher level than the axle (24).

4. Device according to Claim 3, characterised in that the pressure rod (6) acting on the workpiece (1) to be locked is supported by the roller support plate (22) by means of two bearings (26-27) in which it can freely slide longitudinally.

5. Device according to one of Claims 3 and 4, characterised in that the means allowing the rollers (4-5) to be locked against the column (3) and allowing the end of the pressure rod (6) to pivot towards the working plane (2) consist of the very axle (24) supporting the rear roller (5), this axle (24) consisting of an eccentric (25) capable of being displaced angularly under the action of a single lever (7).

6. Device for locking a workpiece (1) on a working plane (2) during a machining operation, especially a drilling operation, of the type comprising :
— a column (3) fastened perpendicularly to the working plane (2),
— an actual locking assembly mounted to slide on the column (3) and comprising :
   a) two rings (4-5) each partially surrounding the column (3) and arranged opposite one another on either side of the latter,
   b) a pressure rod (6) associated with the said rings (4-5) and capable of being able to slide parallel to the working plane (2) or towards the latter,
   c) means making it possible, under the action of a single control lever (7), to pivot towards the working plane (2) of the end of the pressure rod (6) which is in contact with the workpiece (1) to be locked, in order to ensure that it is immobilised on the working plane (2),

characterised in that the pressure rod (6) takes the form of an assembly comprising two parallel arms, the two arms being arranged on either side of the front ring (4) and being capable of pivoting independently of one another relative to the column (3), being subjected to the action of a system of cams (34-35) making it possible, under the action of the single control lever (7), on the one hand to clamp the two rings (4-5) on the column (3), and on the other hand, simultaneously or with a slight offset, to cause the pivoting of the pressure rod (6).

7. Device according ot Claim 6, characterised in that the arms (6) are removable, and in that they are supported by means of a plate (31) mounted pivotally by means of an axle (42) on the front face of the ring (4), a flexible blade (40) being located underneath arms (6) and ensuring their support.

8. Device according to Claim 6, characterised in that locking against the column (3) is effected by means of the single control lever (7) which causes the rotation of a cam (34), thus causing the rear ring (5) to be clamped against the column (3), this cam (34) being located in orifices (35) provided in the lateral parts (8, 9) of the front ring (4), the said orifices (35) having a diameter greater than that of the cam (34), thus assisting the clamping of the said rear ring (5) against the column (3).

**Ansprüche**

1. Vorrichtung zum Festspannen eines Werkstückes (1) auf einer Arbeitsfläche (2) während eines Bearbeitungsvorganges, insbesondere des Bohrens, mit

— einem senkrechtstehend auf der Arbeitsfläche (2) befestigten Ständer (3),

— einer eigentlichen Festspanneinrichtung, die auf dem Ständer (3) verschiebbar ist und folgende Elemente aufweist :

a) zwei Haltestücke (4, 5), die jeweils den Ständer (3) teilweise umschließend einander zugewandt auf beiden Seiten desselben angeordnet sind,

b) einem Spannarm (6), der den Haltestücken (4, 5) zugeordnet ist und parallel zur Arbeitsfläche (2) verschiebbar oder in Richtung derselben beweglich ist,

c) Mittel, mit denen durch einen einzigen Betätigungshebel (7) das auf dem festzuspannenden Werkstück (1) aufliegende Ende des Spannarms (6) zur Arbeitsfläche (2) hin verschwenkbar ist, um das Werkstück (1) auf der Arbeitsfläche (2) festzulegen,

dadurch gekennzeichnet, daß einerseits zum Festklemmen der beiden Haltestücke (4, 5) auf dem Ständer (3) und andererseits zum gleichzeitig oder mit leichter Zeitverschiebung erfolgenden Verschwenken des Spannarms (6) zur Arbeitsfläche (2) hin — das auf der Seite des festzuspannenden Werkstücks gelegene Haltestück (4) zwei Seitenwangen (8, 9) aufweist, deren Länge derart ist, daß sie, zurückgezogen, über den Ständer (3) vorstehen und die einerseits Elemente zum Halten und Führen des Spannarms (6) und andererseits Ausnehmungen (10, 11) als Lager für eine Achse (12) aufweisen, welche zwei Sätze von Nocken (13, 14, 15) trägt, die durch den einzigen Betätingunshebel (7) betätigbar sind, wobei der Nocken (14) sich derart auf dem hinteren Haltestück (5) abstützt, daß die Haltestücke (4, 5) auf dem Ständer (3) festeklemmt werden und die anderen Nocken (13, 15) auf den Spannarm (6) wirken und ihn um die Achse (17) zur Arbeitsfläche (2) hin verschwenken, so daß das festzuspannende Werkstück (1) festgeklemmt wird.

2. Vorrichtung nach Anspruch 1, dadurch gekennzeichnet, daß der Spannarm (6) mehrteilig ist und zwei parallele Einzelarme mit konvergierenden Enden aufweist, wobei das Ganze durch zwei Sätze von Rollen (16, 17) gehalten ist, die auf beiden Seiten des vorderen Haltestücks (4) gegeneinander versetzt in Ebenen angeordnet sind, die mit einem Abstand zur Arbeitsfläche (2) parallel liegen.

3. Vorrichtung zum Festspannen eines Werkstückes (1) auf einer Arbeitsfläche (2) während eines Bearbeitungsvorganges, insbesondere des Bohrens, mit :

— einem senkrecht stehenden, auf der Arbeitsfläche (2) befestigten Ständer (3),

— einer eigentlichen Festspanneinrichtung, die auf dem Ständer (3) verschiebbar ist und folgende Elemente aufweist :

a) zwei Haltestücke (4, 5), die, jeweils den Ständer (3) teilweise umschließend, einander zugewandt auf beiden Seiten desselben angeordnet sind,

b) einem Spannarm (6), der den Haltestücken (4, 5) zugeordnet ist und parallel zur Arbeitsfläche (2) verschiebbar oder in Richtung derselben beweglich ist,

c) Mittel, mit denen durch einen einzigen Betätigungshebel (7) das auf dem festzuspannenden Werkstück (1) aufliegende Ende des Spannarms (6) zur Arbeitsfläche (2) hin verschwenkt ist, um das Werkstück (1) auf der Arbeitsfläche (2) festzulegen,

dadurch gekennzeichnet, daß — einerweise zum Festklemmen der beiden Haltestücke (4, 5) auf dem Ständer (3) und andererseits zum gleichzeitig oder mit leichter Zeitverschiebung erfolgenden Verschwenken des Spannarms (6) — die beiden Haltestücke (4, 5), die teilweise den Ständer (3) umschließen, durch zwei im Abstand voneinander auf einer gemeinsamen Trägerplatte (22) angeordnete Rollen gebildet sind, die zylindrische Auskehlungen (20, 21) aufweisen, mit denen sie an den Ständer (3) anlegbar sind, und deren Achsen (23, 24) in zueinander versetzten parallelen Ebenen liegen, wobei die auf der Seite des festzuspannenden Werkstücks befindliche Achse (23) auf einem höheren Niveau als die Achse (24) liegt.

4. Vorrichtung nach Anspruch 3, dadurch gekennzeichnet, daß der auf das festzuspannende Werkstück (1) wirkende Spannarm (6) von der Trägerplatte (22) der Rollen getragen ist, wo er in zwei Lagern (26, 27) frei längsverschiebbar ist.

5. Vorrichtung nach einem der Ansprüche 3 und 4, dadurch gekennzeichnet, daß die Mittel zum Andrücken der Rollen (4, 5) an den Ständer (3) sowie zum Verschwenken des Endes des Spannarmes (6) zur Arbeitsfläche (2) hin von derselben Achse (24) gebildet sind, die die hintere Rolle (5) trägt, wobei diese Achse (24) ein durch einen einzigen Hebel (7) in seiner Winkelstellung verstellbarer Exzenter (25) ist.

6. Vorrichtung zum Festspannen eines Werkstückes (1) auf einer Arbeitsfläche (2) während eines Bearbeitungsvorganges, insbesondere des Bohrens, mit

— einem senkrechtstehend auf der Arbeitsfläche (2) befestigten Ständer (3),

— einer eigentlichen Festspanneinrichtung, die auf dem Ständer (3) verschiebbar ist und folgende Elemente aufweist :

a) zwei Haltestücke (4, 5), die, jeweils den Ständer (3) teilweise umschließend, einander zugewandt auf beiden Seiten desselben angeordnet sind,

b) einen Spannarm (6), der den Haltestücken (4, 5) zugeordnet ist und parallel zur Arbeitsfläche (2) verschiebbar oder in Richtung derselben beweglich ist,

c) Mittel, mit denen durch einen einzigen Betätigungshebel (7) das auf dem festzuspannenden Werkstück (1) aufliegende Ende des Spannarms (6) zur Arbeitsfläche (2) hin verschwenkbar ist, um das Werkstück (1) auf der Arbeitsfläche (2) festzulegen,

dadurch gekennzeichnet, daß der Spannarm (6) mehrteilig ist und zwei parallele Einzelarme aufweist, die auf beiden Seiten des vorderen Haltestücks (4) angeordnet und unabhängig voneinander gegenüber dem Ständer (3) verschwenkbar sind und die der Wirkung eines Satzes von Nocken (34, 35) unterworfen sind, die es ermöglichen, durch den einzigen Betätigungshebel (7) einerseits die beiden Haltestücke (4, 5) an den Ständer (3) anzudrücken und andererseits gleichzeitig oder mit einer leichten Zeitverschiebung den Spannarm (6) zu verschwenken.

7. Vorrichtung nach Anspruch 6, dadurch gekennzeichnet, daß die Einzelarme (6) abnehmbar sind und daß ihr Halt mittels einer Platte (41) gesichert ist, die um eine Achse (42) an der Vorderseite des Haltestücks (4) schwenkbar angeordnet ist, wobei unterhalb der Einzelarme (6) zu ihrer Halterung eine Blattfeder (40) vorgesehen ist.

8. Vorrichtung nach Anspruch 6, dadurch gekennzeichnet, daß das Andrücken an den Ständer (3) mittels des einzigen Betätigungshebels (7) erfolgt, der die Verdrehung eines das hintere Haltestück (5) an den Ständer (3) andrückenden Nockens (34) bewirkt, der in Ausnehmungen (35) angeordnet ist, welche in den Seitenwangen (8, 9) des vorderen Haltestücks (4) vorgesehen sind und deren Durchmesser größer ist als der Durchmesser des Nockens (34), was das Andrücken des hinteren Haltestücks (5) gegen den Ständer (3) begünstigt.

FIG.1

1

**FIG. 2**

**FIG. 3**

**FIG.4**

**FIG. 5**

FIG. 6

FIG.7

**FIG.9**

7

34

**FIG.10**

5

43

**FIG.8**

7

3

8

4

5

9

41

6

40

42

35

34

1

2